# EUROPÄISCHE PATENTANMELDUNG

(11) **EP 3 560 724 A1**
(43) Veröffentlichungstag der Anmeldung: **30.10.2019**
(21) Anmeldenummer: 18169260.9
(22) Anmeldetag: 25.04.2018
(51) Int. Cl.: B42D 25/405, B29D 11/00, B41M 3/00, G02B 27/22, B42D 25/41, B42D 25/40, B42D 25/324, B29C 64/112, G02B 3/00

(54) **VERFAHREN UND VORRICHTUNG ZUM HERSTELLEN EINES BESCHICHTETEN SUBSTRATS**

(71) Anmelder: Mayr-Melnhof Karton AG, 1041 Wien (AT)
(72) Erfinder: VORENKAMP, Harman, 71549 Auenwald (DE)
(74) Vertreter: Hofstetter, Schurack & Partner

(57) **Zusammenfassung**

Die Erfindung betrifft ein Verfahren zum Herstellen eines beschichteten Substrats (10), bei welchem zumindest die Schritte a) Bereitstellen des Substrats (10), b) Beschichten zumindest eines Oberflächenbereichs des Substrats (10) mit einer Basisschicht (14), c) Beschichten zumindest eines Oberflächenbereichs der Basisschicht (14) mit einer transparenten Zwischenschicht (16) und d) Ausbilden wenigstens einer Mikrolinse (18) auf zumindest einem Oberflächenbereich der Zwischenschicht (16) mittels eines Druckverfahrens aus der Gruppe Tintenstrahldruckverfahren und/oder Lasertransferdruckverfahren durchgeführt werden. Die Erfindung betrifft weiterhin eine Vorrichtung zum Herstellen eines beschichteten Substrats (10), ein beschichtetes Substrat (10) und eine Verpackung aus einem solchen Substrat (10).

## Beschreibung

Die Erfindung betrifft ein Verfahren und eine Vorrichtung zum Herstellen eines beschichteten Substrats. Die Erfindung betrifft weiterhin ein beschichtetes Substrat sowie eine Verpackung aus einem solchen Substrat.

Substrate, insbesondere solche, die zur Herstellung von flexiblen Substraten dienen, beispielsweise von Papier, Karton oder Textilien, von Urkunden wie etwa Banknoten, von Sicherheitsdokumenten wie beispielsweise Ausweisen, von Zuschnitten oder von Verpackungen, beispielsweise von Faltschachteln, sollen üblicherweise mit differenzierenden Eigenschaften versehen werden. Hierzu können Beschichtungen verwendet werden, mit denen ein Substrat individualisiert wird. Dies ist jedoch häufig nur mit vergleichsweise hohem Aufwand und vergleichsweise geringer Flexibilität möglich, was insbesondere bei Substraten für Massenwaren zu Schwierigkeiten führen kann.

Aufgabe der vorliegenden Erfindung ist es, ein Verfahren und eine Vorrichtung anzugeben, welche eine verbesserte Individualisierung von Substraten ermöglichen. Weiterhin ist es Aufgabe der Erfindung, ein beschichtetes Substrat und eine Verpackung zu schaffen, welche eine verbesserte Individualisierung auch für Massenwaren ermöglichen.

Die Aufgaben werden erfindungsgemäß durch ein Verfahren mit den Merkmalen des Patentanspruchs 1, durch eine Vorrichtung gemäß Patentanspruch 10, durch ein Substrat gemäß Patentanspruch 11 sowie durch eine Verpackung gemäß Patentanspruch 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Verfahren zum Herstellen eines beschichteten Substrats. Eine verbesserte Individualisierung des Substrats ist erfindungsgemäß dadurch ermöglicht, dass zumindest die Schritte a) Bereitstellen des Substrats, b) Beschichten zumindest eines Oberflächenbereichs des Substrats mit einer Basisschicht, c) Beschichten zumindest eines Oberflächenbereichs der Basisschicht mit einer transparenten Zwischenschicht und d) Ausbilden wenigstens einer Mikrolinse auf zumindest einem Oberflächenbereich der Zwischenschicht mittels eines Druckverfahrens aus der Gruppe Tintenstrahldruckverfahren und/oder Lasertransferdruckverfahren durchgeführt werden. Mit anderen Worten ist es vorgesehen, dass ein Substrat, welches aus einem geeigneten beschichtbaren Material wie beispielsweise einem Zellulosematerial (Papier, Karton, Pappe), einer Textilie, einem Kunststoff, einem Metall bzw. einer Metalllegierung, einem Verbundwerkstoff und dergleichen bestehen kann, mit einem Schichtsystem mit wenigstens drei Schichten versehen wird, wobei zunächst die Basisschicht, anschließend die transparente Zwischenschicht und abschließend eine oder mehrere Mikrolinsen erzeugt bzw. aufgebracht werden, wobei die wenigstens eine Mikrolinse durch ein Tintenstrahldruckverfahren, durch ein Lasertransferdruckverfahren oder durch eine Kombination hieraus hergestellt wird. Generell kann als Substrat jeder geeignete Druckträger, also beispielsweise Papier, Karton, Pappe, Folie, Blech, Textilien, Glas, Keramik und dergleichen sowie beliebige Kombinationen hieraus verwendet werden. Beispielsweise können als Substrat Postkarten, Kunststofffolien, Verpackungsmaterialien, Etikettenmaterialien oder Verbundmaterialien, die beispielsweise aus Papier bzw. Karton und einer Kunststofffolie und/oder einer Aluminiumfolie bestehen, verwendet werden. Unter einer Mikrolinse werden im Rahmen der vorliegenden Offenbarung Streuungs- und/oder Bündelungslinsen verstanden, deren Breite bzw. Durchmesser zwischen 1 µm und 5 mm liegt. Die wenigstens eine Mikrolinse kann dabei grundsätzlich unterschiedliche geometrische Formen aufweisen, so dass der Begriff "Mikrolinse" vorliegend neben runden bzw. sphärischen Linsen beispielsweise auch Ringlinsen, Stablinsen, ovale Linsen etc. umfasst. Funktional werden die Lichtstrahlen in Mikrolinsen den physikalischen Gesetzen entsprechend gebrochen, so dass Lichtstrahlen ausgehend von der Basisschicht durch die Zwischenschicht, die zumindest für Licht im für den Menschen sichtbaren Wellenlängenbereich zwischen etwa 780 nm und etwa 380 nm transparent ist, und die wenigstens eine Mikrolinse austreten und von einem Betrachter wahrgenommen werden können. Neben der Anzahl, Anordnung und Ausgestaltung der Mikrolinse(n) ist über die Ausgestaltung der transparenten Zwischenschicht dabei eine weitere Möglichkeit zur Beeinflussung des Eindrucks für einen Betrachter ermöglicht. Beispielsweise können bestimmte optische Effekte über die Einstellung der Dicke der Zwischenschicht gezielt beeinflusst werden. Die Lichtstrahlen können grundsätzlich von der Basisschicht abgestrahlt werden, beispielsweise wenn die Basisschicht fluoreszierende bzw. lichtleitende Eigenschaften besitzt, und/oder von der Basisschicht teilweise oder überwiegend reflektiert werden. Hierdurch kann die optische Anmutung der Basisschicht und damit des Substrats gezielt gesteuert werden, so dass verschiedene Individualisierungen des Substrats schnell und automatisierbar durchgeführt werden können. Die Verwendung des Tintenstrahldruckverfahrens und/oder des Lasertransferdruckverfahrens ermöglicht es dabei, das Druckmedium durch berührungsloses Drucken (engl. "Non Impact Printing"; Abkürzung NIP) ohne Druckform auf die Zwischenschicht aufzubringen, wodurch eine oder mehrere Mikrolinsen mit nahezu beliebiger Geometrie schnell, flexibel und mit hochgenauer Formgebung ausgebildet werden können. Darüber hinaus arbeiten beide Druckverfahren berührungslos, so dass eine drucklose und damit besonders schonende Beschichtung der Zwischenschicht ermöglicht ist. Im Fall des Lasertransferdrucks ist es alternativ möglich, zunächst eine temporär generierte Druckform zu erzeugen, die dann mit einem sehr geringen mechanischen Druck auf die Zwischenschicht aufgebracht werden kann. Dabei ist es unerheblich, ob das Druckbild, welches die wenigstens eine Mikrolinse umfasst oder aus der wenigstens einen Mikrolinse besteht, direkt oder indirekt über einen Zwischenträger auf die Zwischenschicht übertragen wird. Damit wird eine Beschädigung der Basisschicht und der Zwischenschicht des Schichtsystems zuverlässig verhindert, selbst wenn beispielsweise die Basisschicht und/oder die Zwischenschicht noch nicht vollständig ausgehärtet sein sollte(n). Die Basisschicht und die Zwischenschicht können grundsätzlich über jedes geeignete Beschichtungsverfahren erzeugt werden. Beispielsweise kann die Basisschicht und/oder die Zwischenschicht durch ein Siebdruck- und/oder Tiefdruckverfahren hergestellt werden. Ebenso kann die Basisschicht und/oder die Zwischenschicht auch durch ein berührungsloses Druckverfahren, beispielsweise durch Tintenstrahldrucken und/oder durch Lasertransferdrucken, hergestellt werden. Weiterhin können grundsätzlich mehrere voneinander getrennte oder aneinander angrenzende Oberflächenbereiche des Substrats oder die gesamte Oberfläche des Substrats in der beschriebenen Weise beschichtet werden, wobei die Eigenschaften der Basisschicht, der transparenten Zwischenschicht und/oder der wenigstens einen Mikrolinse über die beschichtete Oberfläche des Substrats hinweg grundsätzlich einheitlich oder unterschiedlich ausgebildet werden können. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer vorteilhaften Ausgestaltung der Erfindung ist vorgesehen, dass die Basisschicht derart ausgebildet wird, dass sie wenigstens zwei Bildelemente umfasst, wobei die wenigstens zwei Bildelemente mittels der transparenten Zwischenschicht und der wenigstens einen Mikrolinse in Abhängigkeit eines Betrachtungswinkels als getrennte Bildinformationen bereitgestellt werden. Hierdurch ist es möglich, das Substrat mit einem 3D-Effekt, einem Animations- oder Bewegungseffekt, einem Flipflop- bzw. Wechselbild-Effekt, einem Zoom-Effekt, einem Morphing-Effekt, einem sogenannten Fly-Eye Linseneffekt und dergleichen zu versehen. Dies ermöglicht eine außergewöhnlich flexible Individualisierung des Substrats mit optischen Effekten, die ansonsten nur mit sehr hohem technischem und finanziellem Aufwand oder in Kleinserien möglich wären.

Weitere Vorteile ergeben sich dadurch, dass die Zwischenschicht mit einer Dicke zwischen 30 µm und 400 µm, also beispielsweise mit einer Dicke von 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, 305 µm, 310 µm, 315 µm, 320 µm, 325 µm, 330 µm, 335 µm, 340 µm, 345 µm, 350 µm, 355 µm, 360 µm, 365 µm, 370 µm, 375 µm, 380 µm, 385 µm, 390 µm, 395 µm oder 400 µm hergestellt wird, wobei alle Zwischenwerte wie beispielsweise 50 µm, 51 µm, 52 µm, 53 µm, 54 µm, 55 µm, 56 µm, 57 µm, 58 µm, 59 µm, 60 µm usw. als grundsätzlich mitoffenbart anzusehen sind. Über die Dicke der transparenten Zwischenschicht kann Einfluss auf die optische Anmutung des jeweiligen Bildelements bzw. optischen Effekts genommen werden, wobei in der Regel eine dickere Zwischenschicht zu einer Verstärkung und eine dünnere Zwischenschicht zu einer Abschwächung des jeweiligen optischen Eindrucks führt. Alternativ oder zusätzlich ist es vorgesehen, dass die wenigstens eine Mikrolinse mit einer Dicke zwischen 4 µm und 70 µm, also beispielsweise mit einer Dicke von 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm oder 70 µm ausgebildet wird. Auch dies stellt eine einfache Möglichkeit dar, um die optische Sammel- bzw. Zerstreuungswirkung der betreffenden Mikrolinse einzustellen. Alternativ oder zusätzlich ist es vorgesehen, dass wenigstens eine Mikrolinse mit einer Breite zwischen 4 µm und 100 µm, also beispielsweise mit einer Breite von 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, 75 µm, 76 µm, 77 µm, 78 µm, 79 µm, 80 µm, 81 µm, 82 µm, 83 µm, 84 µm, 85 µm, 86 µm, 87 µm, 88 µm, 89 µm, 90 µm, 91 µm, 92 µm, 93 µm, 94 µm, 95 µm, 96 µm, 97 µm, 98 µm, 99 µm oder 100 µm ausgebildet wird. Unter der Breite der Mikrolinse wird im Rahmen der vorliegenden Offenbarungen im Fall von runden Mikrolinsen der Durchmesser und im Fall von nicht-runden Mikrolinsen die kürzere Seite in horizontaler Richtung bezogen auf die Oberfläche des Substrats. Als die Länge wird im Rahmen der vorliegenden Offenbarungen im Fall von nicht-runden Mikrolinsen die längere Seite in horizontaler Richtung bezogen auf die Oberfläche des Substrats bezeichnet. Als Dicke wird im Rahmen der vorliegenden Offenbarungen die vertikale bzw. senkrecht zur Oberfläche des Substrats verlaufende Ausdehnung bezeichnet. Alternativ oder zusätzlich ist vorgesehen, dass wenigstens zwei benachbarte Mikrolinsen in einem Abstand zwischen 0 µm und 80 µm, also beispielsweise in einem Abstand von 0 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, 75 µm, 76 µm, 77 µm, 78 µm, 79 µm oder 80 µm zueinander ausgebildet werden. Ein Abstand von 0 µm bedeutet, dass die beiden Mikrolinsen unmittelbar aneinander angrenzen. Auch über den Abstand zweier benachbarter Mikrolinsen zueinander können die Lichtbrechungseigenschaften und damit der optische Eindruck des Substrats gezielt eingestellt werden.

In einer weiteren vorteilhaften Ausgestaltung der Erfindung ist vorgesehen, dass wenigstens eine Mikrolinse mit einer konvexen und/oder konkaven lichtbrechenden Fläche ausgebildet wird. Eine konvexe Fläche bricht parallel einfallende Lichtstrahlen so, dass sich die Lichtstrahlen im Brennpunkt der Mikrolinse kreuzen. Eine konkave Fläche bricht parallel einfallende Lichtstrahlen so, dass sich die Lichtstrahlen im Raum zerstreuen. Die wenigstens eine Mikrolinse kann dabei grundsätzlich nur eine einzige konvexe oder eine einzige konkave Fläche oder sowohl eine konvexe als auch eine konkave Fläche aufweisen. Dies stellt eine einfache Möglichkeit dar, die optischen Eigenschaften des beschichteten Substrats einzustellen.

Weitere Vorteile ergeben sich dadurch, dass wenigstens eine Mikrolinse mit einer runden, elliptischen oder mehreckigen Grundfläche ausgebildet wird und/oder dass wenigstens eine Mikrolinse mit einer stabförmigen Längserstreckung ausgebildet wird. Mit anderen Worten können Mikrolinsen mit unterschiedlichen Geometrien bzw. Grundflächen hergestellt werden, wodurch entsprechend unterschiedliche optische Effekte realisierbar und breite Individualisierungsmöglichkeiten gegeben sind. Beispielsweise können Mikrolinsen rotationssymmetrisch oder unsymmetrisch ausgebildet sein.

In einer weiteren vorteilhaften Ausgestaltung der Erfindung ist vorgesehen, dass mehrere Mikrolinsen in Form eines quadratischen und/oder rechteckigen und/oder hexagonalen Gitters angeordnet werden. Hierdurch können sogenannte Mikrolinsenarrays gebildet werden, die als Strahlformungssystem beispielsweise zum Homogenisieren des einfallenden bzw. austretenden Lichts verwendet werden können. Alternativ oder zusätzlich kann vorgesehen sein, dass mehrere Mikrolinsen in Form einer Linienschar angeordnet werden. Die Mikrolinsen sind in diesem Fall stabförmig bzw. länglich ausgebildet und können auch als Lentikularen bezeichnet werden, wobei die einzelnen stabförmigen Mikrolinsen in die gleiche oder in unterschiedliche Richtungen verlaufen können. Weiterhin können die stabförmigen Mikrolinsen von einer linearen Form abweichen und beispielsweise gekrümmt verlaufen. Die Mikrolinsen können dazu verwendet werden, aus einer dahinter liegenden Bildinformation der Basisschicht je nach Blickwinkel eines Betrachters zwei oder mehr verschiedene Bildelemente herauszufiltern. Damit können beispielsweise zwei für das dreidimensionale Sehen notwendige Bildinformationen getrennt zur Verfügung gestellt werden, ohne dass hierfür spezielle Brillen oder andere Hilfsmittel erforderlich wären.

In einer weiteren vorteilhaften Ausgestaltung der Erfindung ist vorgesehen, dass die Basisschicht und/oder die Zwischenschicht und/oder die wenigstens eine Mikrolinse als Schichtsystem aus mindestens zwei Schichten hergestellt wird. Mit anderen Worten kann die Basisschicht und/oder die Zwischenschicht und/oder die wenigstens eine Mikrolinse aus zwei, drei, vier oder mehr Schichten aufgebaut werden und für sich genommen ein Schichtsystem bilden. Die einzelnen Schichten können dabei grundsätzlich identisch oder beispielsweise hinsichtlich ihrer Dicke, ihrer Geometrie, ihrer Zusammensetzung etc. voneinander abweichend ausgebildet werden.

In einer weiteren vorteilhaften Ausgestaltung der Erfindung ist es vorgesehen, dass die Basisschicht und/oder die Zwischenschicht durch ein oder mehrere Druckverfahren aus der Gruppe Flachdruck, Tiefdruck, Digitaldruck, Siebdruck und Hochdruck hergestellt wird. Dies erlaubt eine flexible Herstellung der Basis- bzw. Zwischenschicht, wodurch eine weitere Individualisierungsmöglichkeit des Substrats gegeben ist.

Weitere Vorteile ergeben sich, indem die Basisschicht und/oder die Zwischenschicht und/oder die wenigstens eine Mikrolinse aus einem Lack hergestellt wird. Unter einem Lack wird ein flüssiger und/oder pulverförmiger Beschichtungsstoff verstanden, der nach dem Auftragen durch chemische und/oder physikalische Vorgänge zu einer Schicht aushärtet. Der Lack kann grundsätzlich organische Polymere, Oligomere, Monomere oder eine beliebige Mischung hieraus als Bindemittel enthalten und optional eine oder mehrere weitere Komponenten wie etwa Füllstoffe, Pigmente, Lösemittel, Harze, (Meth)Acrylate und Additive, insbesondere Additive, die den Brechungsindex der Schicht vergrößern oder verkleinern enthalten.

Ein zweiter Aspekt der Erfindung betrifft eine Vorrichtung zum Herstellen eines beschichteten Substrats. Eine verbesserte Individualisierung von Substraten ist erfindungsgemäß ermöglicht, indem die Vorrichtung Mittel zum Halten des Substrats, Mittel zum Erzeugen einer Basisschicht auf dem Substrat, Mittel zum Erzeugen einer transparenten Zwischenschicht auf der Basisschicht und eine berührungslose Druckeinrichtung aus der Gruppe Tintenstrahldrucker und/oder Lasertransferdrucker, mittels welcher wenigstens eine Mikrolinse auf der Zwischenschicht erzeugbar ist, umfasst. Weitere Merkmale und deren Vorteile sind den Beschreibungen des ersten Erfindungsaspekts zu entnehmen. Vorzugsweise ist die Vorrichtung zum Durchführen eines Verfahrens gemäß dem ersten Erfindungsaspekt ausgebildet bzw. durch entsprechende Hard- und/oder Softwaremittel zum Durchführen eines Verfahrens gemäß dem ersten Erfindungsaspekt eingerichtet.

Ein dritter Aspekt der Erfindung betrifft ein Substrat, welches zumindest bereichsweise ein Schichtsystem aufweist, das zumindest eine auf dem Substrat aufgebrachte Basisschicht, eine auf der Basisschicht aufgebrachte transparente Zwischenschicht und wenigstens eine mittels eines berührungslosen Druckverfahrens aus der Gruppe Tintenstrahldruckverfahren und/oder Lasertransferdruckverfahren auf der Zwischenschicht aufgebrachte Mikrolinse umfasst. Hierdurch ist eine verbesserte Individualisierung auch für Massenwaren ermöglicht, da das Substrat einfach und flexibel mit unterschiedlichen optischen Effekten, beispielsweise mit 3D-Effekt, einem Animations- oder Bewegungseffekt, einem Flipflop- bzw. Wechselbild-Effekt, einem Zoom-Effekt, einem Morphing-Effekt, einem sogenannten Fly-Eye Linseneffekt und dergleichen, ausgestattet sein kann. Generell kann als Substrat jeder geeignete Druckträger, also beispielsweise Papier, Karton, Pappe, Folie, Blech, Textilien, Glas, Keramik dergleichen sowie beliebige Kombinationen hieraus verwendet werden. Beispielsweise kann als Substrat ein Papier, ein Karton, eine Postkarte, eine Kunststofffolie, ein Verpackungsmaterial, ein Etikettenmaterial oder ein Verbundmaterial, das beispielsweise aus Papier bzw. Karton und einer Kunststofffolie und/oder einer Aluminiumfolie besteht, verwendet werden. Weitere Merkmale und deren Vorteile sind den Beschreibungen des ersten und zweiten Erfindungsaspekts zu entnehmen.

Weitere Vorteile ergeben sich, indem das Substrat als flexibler Bedruckstoff, als Urkunde, als Sicherheitsdokument, als Zuschnitt und/oder als Verpackung, insbesondere für Tabakwaren, ausgebildet ist. Beispielsweise kann das Substrat als beschichtetes Papier oder beschichteter Karton, zum Beispiel als Postkarte, als Textilie, beispielsweise als Bekleidungsstück, als Urkunde, zum Beispiel als Banknote oder sonstiges Sicherheitserzeugnis, und/oder als Sicherheitsdokument, beispielsweise als Ausweis, ausgebildet sein. Von Papier wird im Rahmen der vorliegenden Offenbarung bis zu einer Grammatur von 150 g/m² gesprochen, von Karton bei einer Grammatur zwischen 150 g/m² und 600 g/m² und ab Grammaturen von 600 g/m² von Pappe. Neben vorteilhaften optischen Effekten können hierdurch bedarfsweise auch Sicherheitsmerkmale vorteilhaft realisiert werden. Weiterhin kann vorgesehen sein, dass das Substrat als Zuschnitt für eine Faltschachtel, beispielsweise für eine Zigarettenschachtel, bzw. als Faltschachtel, beispielsweise als Zigarettenschachtel, ausgebildet ist. Dies ist besonders vor dem Hintergrund zunehmender gesetzlicher Standardisierungsanforderungen vorteilhaft, da mit Hilfe des erfindungsgemäßen Substrats dennoch optische Individualisierungen ermöglicht sind.

In einer weiteren vorteilhaften Ausgestaltung der Erfindung ist vorgesehen, dass die Basisschicht wenigstens zwei Bildelemente umfasst, wobei die wenigstens zwei Bildelemente durch die wenigstens einen Mikrolinse und die transparente Zwischenschicht hindurch aus jeweils unterschiedlichen Betrachtungsrichtungen erkennbar sind. Eine solche Darstellungsanordnung ermöglicht einen räumlichen Bildeindruck, weist eine besonders hohe optische Attraktivität auf und kann vorteilhaft ohne optische Hilfsmittel wie 3D-Brillen und dergleichen wahrgenommen werden. Statt eines räumlichen Eindrucks kann auch für sogenannte Wechsel- oder Wackelbilder eine Bewegung oder ein Bildwechsel zwischen zwei oder mehr Bildelementen erzeugt werden. Dieser Effekt tritt auf, wenn die Bildelemente aus verschiedenen Blickwinkeln betrachtet werden.

Ein optisch attraktiver Zoom-Effekt wird in weiterer Ausgestaltung der Erfindung dadurch erreicht, dass die Basisschicht wenigstens ein Bildelement umfasst, welches durch die wenigstens einen Mikrolinse und die transparente Zwischenschicht hindurch vergrößert und/oder verkleinert erkennbar ist.

Ein weiterer Aspekt der Erfindung betrifft eine Verpackung, insbesondere eine Faltschachtel wie beispielsweise eine Zigarettenschachtel, welche zumindest teilweise, überwiegend oder vollständig aus einem Substrat gemäß dem vorhergehenden Erfindungsaspekt besteht. Die daraus resultierenden Merkmale und deren Vorteile sind den Beschreibungen der vorhergehenden Erfindungsaspekte zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische seitliche Schnittansicht eines beschichteten Substrats gemäß einem ersten Ausführungsbeispiel;
- Fig. 2: eine schematische seitliche Schnittansicht des beschichteten Substrats gemäß einem zweiten Ausführungsbeispiel;
- Fig. 3: eine Aufsicht des beschichteten Substrats gemäß einem dritten Ausführungsbeispiel;
- Fig. 4: eine schematische Perspektivansicht des beschichteten Substrats gemäß einem vierten Ausführungsbeispiel;
- Fig. 5: eine schematische und teilweise geschnittene Perspektivansicht des beschichteten Substrats gemäß einem fünften Ausführungsbeispiel; und
- Fig. 6: eine schematische seitliche Schnittansicht des beschichteten Substrats gemäß dem fünften Ausführungsbeispiel im Bereich einer Mikrolinse.

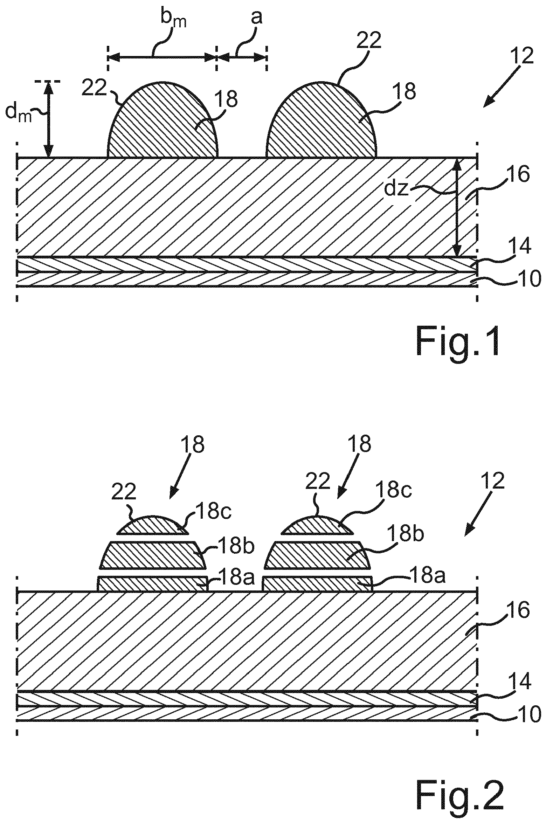

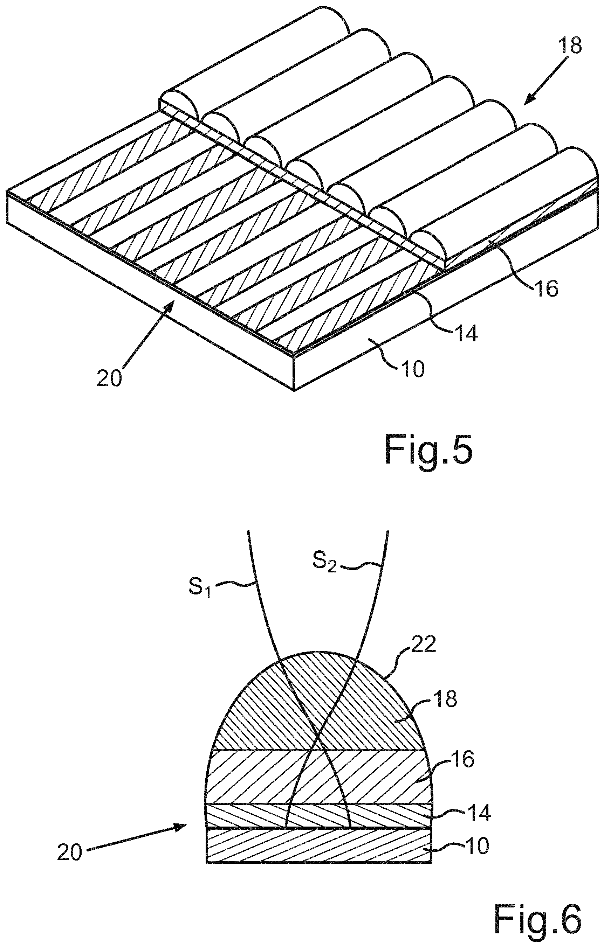

Fig. 1 eine schematische seitliche Schnittansicht eines beschichteten Substrats 10 gemäß einem ersten Ausführungsbeispiel der Erfindung. Das Substrat 10, welches generell beispielsweise aus Papier, Karton, Pappe, Textilien, Kunststoff, Metall bzw. einer Metalllegierung oder einem Verbundwerkstoff aus zwei oder mehr der genannten Materialien bestehen und grundsätzlich unbeschichtet oder bereits mit einer oder mehreren Schichten beschichtet sein kann, wird zumindest bereichsweise mit einem Schichtsystem 12 versehen, das aus mindestens drei Schichten, nämlich eine auf dem Substrat 10 aufgebrachte Basisschicht 14, eine auf der Basisschicht 14 aufgebrachte transparente Zwischenschicht 16 und mehrere auf der Zwischenschicht 16 aufgebrachte Mikrolinsen 18 als oberste Schicht besteht. Grundsätzlich kann es in manchen Fällen vorgesehen sein, dass auf den Mikrolinsen 18 eine weitere transparente Deckschicht erzeugt wird, um die Mikrolinsen 18 vor mechanischer Beschädigung zu beschützen. Die Mikrolinsen 18 werden dabei mittels eines berührungslosen Druckverfahrens aus der Gruppe Tintenstrahldruckverfahren und/oder Lasertransferdruckverfahren in Form von sogenannten Rasterpunkten oder -linien hergestellt, während die Basisschicht 14 und die Zwischenschicht 16 unabhängig voneinander mit jedem geeigneten Druckverfahren, beispielsweise ebenfalls mit einem Tintenstrahldruckverfahren und/oder einem Lasertransferdruckverfahren oder mit einem Flachdruck-, Tiefdruck-, Siebdruck- oder Hochdruckverfahren, hergestellt werden können. Vorzugsweise wird die Zwischenschicht 16 aus einem transparenten Lack hergestellt, der grundsätzlich organische Polymere, Oligomere und/oder Monomere als Binder sowie optional weitere Inhaltsstoffe enthalten kann. Die Basisschicht 14 bildet oder umfasst ein oder mehrere Motive bzw. Bildelemente 20 (s. Fig. 5), das bzw. die durch die transparente Zwischenschicht 16 und die Mikrolinsen 18 hindurch erkennbar ist bzw. sind. Mit Hilfe der Mikrolinsen 18 kann dabei der optische Eindruck des oder der Bildelemente 20 verändert werden, so dass beispielsweise 3D-Bilder, optische Bewegungseffekte, Flipflop-Effekte, Zoom-Effekte und dergleichen realisierbar sind.

Die Zwischenschicht 16 weist im vorliegenden Ausführungsbeispiel eine Dicke d_{z} zwischen etwa 40 µM und etwa 300 µm auf, wodurch der Strahlenpfad und damit die optische Wirkung der Mikrolinsen 18 variiert werden kann. Die Mikrolinsen 18 werden generell mit einer Dicke dₘ zwischen 4 µm und 70 µm hergestellt und weisen im vorliegenden Ausführungsbeispiel eine Dicke dₘ zwischen etwa 5 µm und etwa 50 µm auf. Der Durchmesser bzw. die Breite bₘ der Mikrolinsen 18 kann in einem Bereich zwischen 4 µm und 100 µm variiert werden und beträgt im vorliegenden Ausführungsbeispiel zwischen etwa 5 µm und etwa 70 µm. Der Abstand a zwischen benachbarten Mikrolinsen 18 kann zwischen 0 µm und 80 µm liegen. Die Form der Grundfläche der Mikrolinsen 18 kann unterschiedlich sein. Beispielsweise können runde, elliptische, dreieckige, quadratische, rechteckige, fünfeckige, sechseckige, mehreckige oder unregelmäßige Grundflächen vorgesehen sein. Weiterhin können die Mikrolinsen 18 nicht nur eine konvexe lichtbrechende Fläche 22 wie im vorliegenden Ausführungsbeispiel, sondern auch konkave lichtbrechende Flächen 22 sowie Kombinationen hieraus besitzen. Weiterhin kann vorgesehen sein, dass eine Vielzahl von Mikrolinsen 18 als sogenanntes Mikrolinsenarray gruppiert wird, wobei die Mikrolinsen 18 in unterschiedlichen Gitterformen, beispielsweise hexagonal bzw. als Facettenarrays oder quadratisch, angeordnet werden können. Hierdurch können die Lichtstrahlengänge gesteuert, insbesondere homogenisiert oder zerstreut werden.

Fig. 2 zeigt eine schematische seitliche Schnittansicht des beschichteten Substrats 10 gemäß einem zweiten Ausführungsbeispiel. Im Unterschied zum vorhergehenden Ausführungsbeispiel werden die Mikrolinsen 18 vorliegend aus mehreren, beispielsweise drei Schichten 18a-c aufgebaut. Die einzelnen Schichten 18a-c unterscheiden sich hinsichtlich ihrer Geometrie und können sich optional auch hinsichtlich ihrer chemischen Zusammensetzung unterscheiden, um eine gewünschte Lichtbrechung zu realisieren. Die gezeigten Zwischenräume zwischen den Schichten 18a-c dienen lediglich der besseren Unterscheidung. Generell kann auch die Basisschicht 14 und/oder die Zwischenschicht 16 aus mehreren Schichten aufgebaut werden.

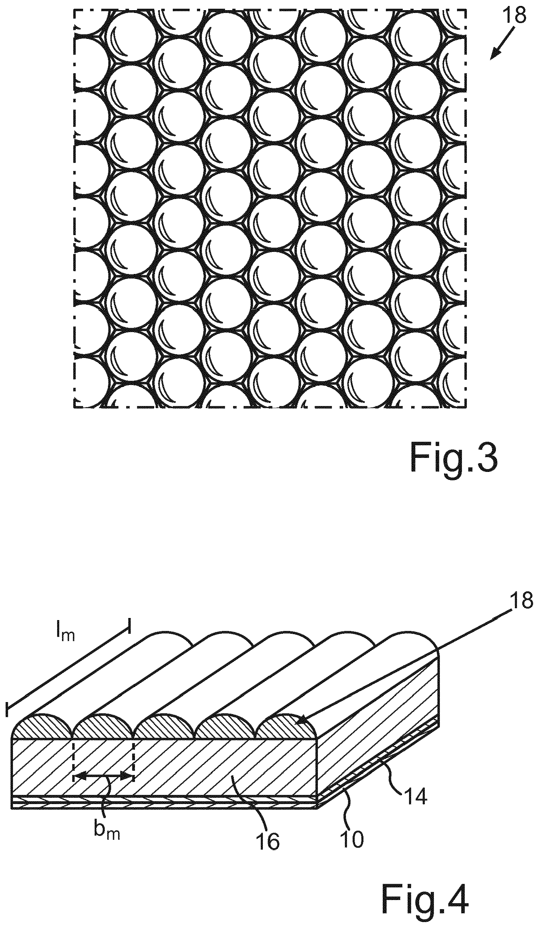

Fig. 3 zeigt eine Aufsicht des beschichteten Substrats 10 gemäß einem dritten Ausführungsbeispiel. Man erkennt die vorliegend rotationssymmetrisch ausgebildeten und als hexagonales Array angeordneten Mikrolinsen 18, durch die das oder die Bildelemente 20 der Basisschicht 14 wahrnehmbar sind.

Fig. 4 zeigt eine schematische Perspektivansicht des beschichteten Substrats 10 gemäß einem vierten Ausführungsbeispiel. Im Unterschied zu den vorhergehenden Ausführungsbeispielen sind die Mikrolinsen 18 nicht rund, sondern linear bzw. stabförmig ausgebildet und grenzen vorliegend unmittelbar aneinander an (Abstand a = 0 µm). Die Mikrolinsen 18 besitzen ebenfalls eine Breite bₘ zwischen etwa 5 µm und 70 µm sowie eine Länge Iₘ, die bedarfsweise zwischen wenigen Mikrometern und einigen Zentimetern variiert werden kann. Alternativ können einige oder alle Mikrolinsen 18 voneinander beabstandet sein (a > 0 µm). Weiterhin kann es vorgesehen sein, dass einige oder alle Mikrolinsen 18 nicht parallel zueinander ausgerichtet sind, sondern in unterschiedliche Richtungen verlaufen. Ebenso kann vorgesehen sein, dass einige oder alle Mikrolinsen 18 nicht linear, sondern gekrümmt verlaufen.

Fig. 5 zeigt eine schematische und teilweise geschnittene Perspektivansicht des beschichteten Substrats 10 gemäß einem fünften Ausführungsbeispiel. Man erkennt insbesondere die Bildelemente 20, bei denen es sich vorliegend exemplarisch um eine Abfolge unterschiedlich farbiger Linien handelt. Aufgrund der Zwischenschicht 16 und den vorliegend stabförmig ausgebildeten Mikrolinsen 18 ergibt sich in Abhängigkeit des Blickwinkels eines Betrachters eine optische Verschiebung der Bildelemente 20.

Fig. 6 zeigt eine schematische seitliche Schnittansicht des beschichteten Substrats 10 gemäß dem fünften Ausführungsbeispiel im Bereich einer Mikrolinse 18, wobei exemplarisch der Strahlengang der an den Bildelementen reflektierten Lichtstrahlen S1 und S2 durch die Zwischenschicht 16 und die Mikrolinse 18 gezeigt ist. Man erkennt die optische, blickwinkelabhängige Verschiebung des ursprünglichen Motivs der Basisschicht 14.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Substrat
- 12: Schichtsystem
- 14: Basisschicht
- 16: Zwischenschicht
- 18: Mikrolinse
- 20: Bildelemente
- 22: Fläche
- d_{z}: Dicke Zwischenschicht
- dₘ: Dicke Mikrolinse
- bₘ: Breite bzw. Durchmesser Mikrolinse
- a: Abstand
- Im: Länge Mikrolinse
- S1, S2: Lichtstrahl

## Patentansprüche

1. Verfahren zum Herstellen eines beschichteten Substrats (10), umfassend zumindest die Schritte
a) Bereitstellen des Substrats (10);
b) Beschichten zumindest eines Oberflächenbereichs des Substrats (10) mit einer Basisschicht (14);
c) Beschichten zumindest eines Oberflächenbereichs der Basisschicht (14) mit einer transparenten Zwischenschicht (16); und
d) Ausbilden wenigstens einer Mikrolinse (18) auf zumindest einem Oberflächenbereich der Zwischenschicht (16) mittels eines Druckverfahrens aus der Gruppe Tintenstrahldruckverfahren und/oder Lasertransferdruckverfahren.

2. Verfahren nach Anspruch 1,
**dadurch gekennzeichnet, dass**
die Basisschicht (14) derart ausgebildet wird, dass sie wenigstens zwei Bildelemente (20) umfasst, wobei die wenigstens zwei Bildelemente (20) mittels der transparenten Zwischenschicht (16) und der wenigstens einen Mikrolinse (18) in Abhängigkeit eines Betrachtungswinkels als getrennte Bildinformationen bereitgestellt werden.

3. Verfahren nach Anspruch 1 oder 2,
**dadurch gekennzeichnet, dass**
die Zwischenschicht (16) mit einer Dicke (d_{z}) zwischen 30 µm und 400 µm hergestellt wird und/oder dass die wenigstens eine Mikrolinse (18) mit einer Dicke (dₘ) zwischen 4 µm und 70 µm ausgebildet wird und/oder dass wenigstens eine Mikrolinse (18) mit einer Breite (bₘ) zwischen 4 µm und 100 µm ausgebildet wird und/oder dass wenigstens zwei benachbarte Mikrolinsen (18) in einem Abstand (a) zwischen 0 µm und 80 µm zueinander ausgebildet werden.

4. Verfahren nach einem der Ansprüche 1 bis 3,
**dadurch gekennzeichnet, dass**
wenigstens eine Mikrolinse (18) mit einer konvexen und/oder konkaven lichtbrechenden Fläche (22) ausgebildet wird.

5. Verfahren nach einem der Ansprüche 1 bis 4,
**dadurch gekennzeichnet, dass**
wenigstens eine Mikrolinse (18) mit einer runden, elliptischen oder mehreckigen Grundfläche ausgebildet wird und/oder dass wenigstens eine Mikrolinse (18) mit einer stabförmigen Längserstreckung ausgebildet wird.

6. Verfahren nach einem der Ansprüche 1 bis 5,
**dadurch gekennzeichnet, dass**
mehrere Mikrolinsen (18) in Form eines quadratischen und/oder rechteckigen und/oder hexagonalen Gitters und/oder in Form einer Linienschar angeordnet werden.

7. Verfahren nach einem der Ansprüche 1 bis 6,
**dadurch gekennzeichnet, dass**
die Basisschicht (14) und/oder die Zwischenschicht (16) und/oder die wenigstens eine Mikrolinse (18) als Schichtsystem (12) aus mindestens zwei Schichten (18a-c) hergestellt wird.

8. Verfahren nach einem der Ansprüche 1 bis 7,
**dadurch gekennzeichnet, dass**
die Basisschicht (14) und/oder die Zwischenschicht (16) durch ein oder mehrere Druckverfahren aus der Gruppe Flachdruck, Tiefdruck, Digitaldruck, Siebdruck und Hochdruck hergestellt wird.

9. Verfahren nach einem der Ansprüche 1 bis 8,
**dadurch gekennzeichnet, dass**
die Basisschicht (14) und/oder die Zwischenschicht (16) und/oder die wenigstens eine Mikrolinse (18) aus einem Lack hergestellt wird.

10. Vorrichtung zum Herstellen eines beschichteten Substrats (10), umfassend
- Mittel zum Halten des Substrats (10);
- Mittel zum Erzeugen einer Basisschicht (14) auf dem Substrat (10);
- Mittel zum Erzeugen einer transparenten Zwischenschicht (16) auf der Basisschicht (14); und
- eine berührungslose Druckeinrichtung aus der Gruppe Tintenstrahldrucker und/oder Lasertransferdrucker, mittels welcher wenigstens eine Mikrolinse (18) auf der Zwischenschicht (16) erzeugbar ist.

11. Substrat (10), welches zumindest bereichsweise ein Schichtsystem aufweist, das zumindest
- eine auf dem Substrat (10) aufgebrachte Basisschicht (14);
- eine auf der Basisschicht (14) aufgebrachte transparente Zwischenschicht (16); und
- wenigstens eine mittels eines berührungslosen Druckverfahrens aus der Gruppe Tintenstrahldruckverfahren und/oder Lasertransferdruckverfahren auf der Zwischenschicht (16) aufgebrachte Mikrolinse (18) umfasst.

12. Substrat (10) nach Anspruch 11,
**dadurch gekennzeichnet, dass**
dieses als flexibler Bedruckstoff, als Urkunde, als Sicherheitsdokument, als Zuschnitt und/oder als Verpackung, insbesondere für Tabakwaren, ausgebildet ist.

13. Substrat (10) nach Anspruch 11 oder 12,
**dadurch gekennzeichnet, dass**
die Basisschicht (14) wenigstens zwei Bildelemente (20) umfasst, wobei die wenigstens zwei Bildelemente (20) durch die wenigstens einen Mikrolinse (18) und die transparente Zwischenschicht (16) hindurch aus jeweils unterschiedlichen Betrachtungsrichtungen erkennbar sind.

14. Substrat (10) nach einem der Ansprüche 11 bis 13,
**dadurch gekennzeichnet, dass**
die Basisschicht (14) wenigstens ein Bildelement (20) umfasst, welches durch die wenigstens einen Mikrolinse (18) und die transparente Zwischenschicht (16) hindurch vergrößert und/oder verkleinert erkennbar ist.

15. Verpackung, insbesondere Faltschachtel, welche zumindest teilweise aus einem Substrat (10) nach einem der Ansprüche 11 bis 14 besteht.
